# EUROPÄISCHE PATENTSCHRIFT

(11) **EP 0 976 666 B1**
(45) Veröffentlichungstag und Bekanntmachung des Hinweises auf die Patenterteilung: **12.12.2001**
(21) Anmeldenummer: 98113960.3
(22) Anmeldetag: 25.07.1998
(51) Int. Cl.: B65G 1/04

(54) **Halterung für Lagerstangen**
Structure for supporting storage bars
Support pour la fixation des barres de stockage

(43) Veröffentlichungstag der Anmeldung: 02.02.2000
(73) Patentinhaber: NEDCON MAGAZIJNINRICHTING B.V., NL-7000 AA Doetinchem (NL)
(72) Erfinder: Lieftink, Willem Johan, 7091 EG Dinxperlo (NL)
(74) Vertreter: Stenger, Watzke & Ring Patentanwälte

(56) Entgegenhaltungen:
- DE-U- 29 715 506
- DE-U- 29 805 840

## Beschreibung

Die vorliegende Erfindung betrifft eine Haltevorrichtung für Lagerstangen zur Aufnahme von Waren zur hängenden Lagerung in einem Lagerregal, welches aus vertikalen Stützen und horizontalen, wenigstens zwei benachbarte Stützen miteinander verbindenden Traversen besteht.

Ein wichtiges Konstruktionselement in Hochregallagern zur Lagerung von Hängewaren ist die Lagerstange, auf der die Ware während des Transportes mit einer Hängevorrichtung oder einer Fördereinrichtung des Regalbediengerätes sowie während der Lagerung im Regal verbleibt. Mittels geeigneter formschlüssiger Halterungen an dem Regalbediengerät und dem Lagerregal können die Lagerstangen mit den daran hängenden Waren leicht umgesetzt werden.

Aus der DE 298 05 840 ist ein Lagerregal bekannt, bei dem die vertikalen Stützen über horizontale Traversen miteinander verbunden werden. Die horizontalen Traversen dienen dabei nicht nur der statischen Absicherung des Lagerregals, sie bilden auch zugleich die Basis zur Aufnahme der Lagerstangen. Zur Aufnahme der Lagerstangen sind entsprechende Auflageflächen über Verbindungsstücke mittelbar an den Traversen befestigt. Diese Verbindungsstücke können als Profile ausgebildet sein, an denen die Auflageflächen angeschraubt oder angeschweißt sind. Auch können die Verbindungsstücke als vertikale Distanzelemente zwischen Traverse und Auflagefläche ausgebildet sein.

Nachteilig bei dieser Art der Aufnahme der Lagerstangen ist, daß für je eine Lagerstange - entsprechend ihrer zwei Enden - zwei Halterungen zur Aufnahme je eines Lagerstangenendes von Nöten sind und der erforderliche Montageaufwand zur Erstellung eines Lagerregals somit hoch ist. Weiterhin ist es nachteilig, daß sich entsprechend der Anzahl an Lagerstangen die doppelte Anzahl an notwendigen Halterungen zur Aufnahme der Lagerstangen ergibt, wodurch die Kosten zur Herstellung des Lagerregals zum einen und die zusätzlichen Kosten durch die Montage zum anderen steigen.

Ausgehend von diesem Stand der Technik liegt der vorliegenden Erfindung die **Aufgabe** zugrunde, für ein Lagerregal der eingangs genannten Art eine Halterung zur Aufnahme von Lagerstangen bereitzustellen, so daß der Montageaufwand gering ist und sich das Lagerregal kostengünstig erstellen läßt.

Zur technischen **Lösung** dieser Aufgabe wird mit der Erfindung vorgeschlagen, eine Haltevorrichtung zur Aufnahme von Lagerstangen, die aus einem Trägerelement und zwei daran ausgebildeten Verbindungselementen besteht, wobei das Trägerelement die einander zugewandten Enden zweier in Traversenquerrichtung benachbarter Lagerstangen aufnimmt und das Trägerelement mittels der Verbindungselemente mit zugleich zwei Traversen kraftschlüssig verbunden ist.

Die erfindungsgemäße Haltevorrichtung besteht aus einem Trägerelement und zwei daran ausgebildeten Verbindungselementen. Das Trägerelement ist mittels der Verbindungselemente mit zugleich zwei horizontalen Traversen des Lagerregals verbindbar und nimmt seinerseits die einander zugewandten Enden zweier in Traversenquerrichtung benachbarter Lagerstangen auf. Hierdurch wird in vorteilhafter Weise die Anzahl an Halterungen zur Aufnahme von Lagerstangen erheblich reduziert, da zur Aufnahme einer Lagerstange nicht mehr zwei separate Halterungen erforderlich sind, sondern eine Halterung nunmehr zwei Lagerstangen aufnimmt. Somit werden zum einen die Kosten für die Erstellung eines solchen Lagerregals reduziert als auch der Montageaufwand und die dadurch zusätzlich entstehenden Kosten gesenkt.

Gemäß einem vorteilhaften Vorschlag der Erfindung sind zwei in Traversenquerrichtung benachbarte Traversen mittels des Trägerelementes kraftschlüssig miteinander verbunden, wobei die Verbindungselemente mit Aufnahmebereichen versehen sind, in die die Traversen oder Teile davon hineinragen. Hierdurch wird eine zusätzliche statische Absicherung des Lagerregals erreicht, da durch das Trägerelement eine Torsionskupplung der beiden Traversen erfolgt.

Gemäß einem weiteren vorteilhaften Vorschlag der Erfindung besteht das Trägerelement einschließlich der Verbindungselemente aus einem Stück, wodurch ein minimaler Montageaufwand erreicht wird. Das Trägerelement besteht in vorteilhafter Weise aus Metall und wird durch Kaltwalzen hergestellt. Denkbar sind allerdings auch andere Materialien wie zum Beispiel Kunststoff.

Mit der Erfindung wird eine Haltevorrichtung für Lagerstangen eines Lagerregals vorgeschlagen, die zum einen der Aufnahme zweier Lagerstangenenden dient und somit den Montageaufwand für die Erstellung eines Lagerregals sowie die damit verbundenen Kosten erheblich reduziert und die zum anderen die statische Absicherung des Lagerregals erhöht, da benachbarte Traversen mittels einer solchen Haltevorrichtung zusätzlich kraftschlüssig miteinander verbunden sind und eine Torsionskupplung der beiden Traversen erfolgt.

Weitere Einzelheiten und Vorteile werden nachfolgend anhand eines Ausführungsbeispiels erläutert, das in den folgenden Figuren dargestellt ist. Dabei zeigt:
- Fig. 1: schematische Schnittdarstellung einer Haltevorrichtung in nicht montierter Situation,
- Fig. 2: schematische Schnittdarstellung des ersten Montageschrittes einer Haltevorrichtung,
- Fig. 3: schematische Schnittdarstellung des zweiten Montageschrittes einer Haltevorrichtung,
- Fig. 4: schematische Schnittdarstellung einer Haltevorrichtung in montierter Situation,
- Fig. 5: perspektivische Darstellung eines Trägerelementes,
- Fig. 6: schematische Seitenschnittdarstellung einer Haltevorrichtung,
- Fig. 7: schematische Seitenansicht eines Aufnahmebereiches des Trägerelementes.

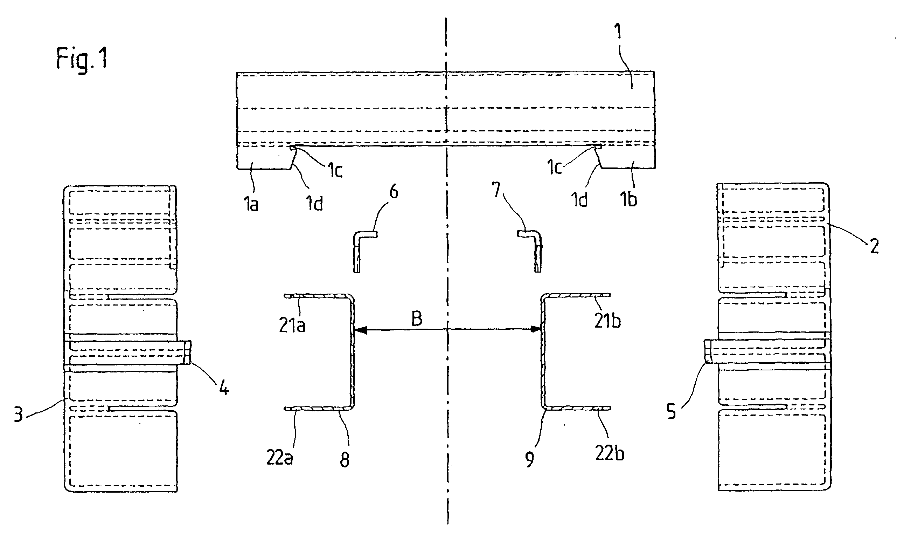

Fig. 1 zeigt eine schematische Schnittdarstellung einer Haltevorrichtung, bestehend aus einem Trägerelement 1, zwei kappenförmigen Aufsetzelementen 2 und 3 sowie zwei Sicherungselementen 6 und 7. Die beiden Aufsetzelemente 2 und 3 beinhalten je zwei Befestigungselemente 4 und 5. Die an den hier nicht dargestellten vertikalen Stützen eines Lagerregals befestigten horizontalen Traversen sind in diesem Ausführungsbeispiel als U- oder C-förmige Profile 8 und 9 ausgebildet, wobei die jeweils offenen Seiten der U- bzw. C-förmigen Profile voneinander wegweisen. Der Abstand B zwischen den beiden in Traversenquerrichtung nebeneinanderliegenden C-förmigen Profilen 8 und 9 ist über die gesamte Profillänge der gleiche und wird durch die hier nicht dargestellten vertikalen Stützen bestimmt, die zwischen den beiden Profilen 8 und 9 angeordnet sind und an denen die beiden U- bzw. C-förmigen Profile jeweils mit ihrer Basis befestigt sind.

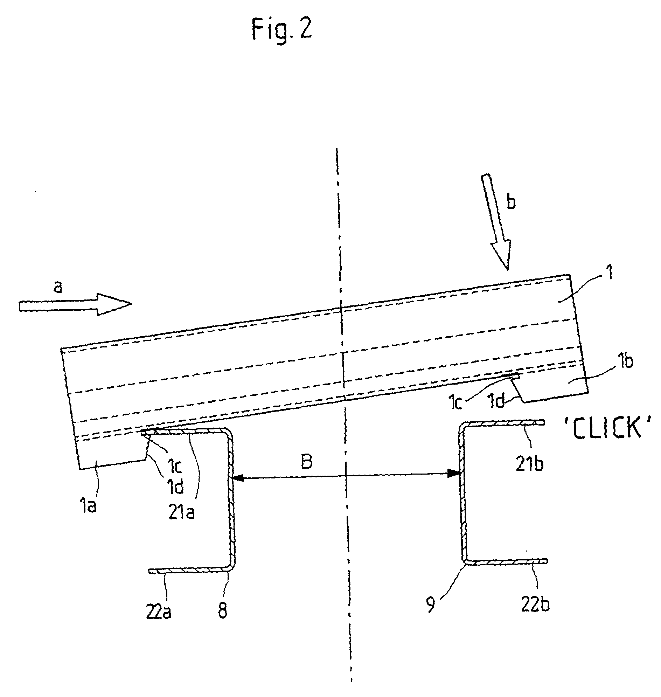

In einem ersten Montageschritt wird das Trägerelement 1 den Abstand B zwischen den beiden U- bzw. C-förmigen Profilen überbrückend mit den Profilen verbunden. Hierzu wird zunächst das eine Ende des Trägerelementes 1 in Schrägstellung in Richtung des Pfeiles a in das C-förmige Profil 8 eingehakt und anschließend das andere Ende des Trägerelementes 1 in Pfeilrichtung b bewegt, bis dieses auf dem U- bzw. C-förmigen Profil 9 einrastet. Dies zeigt Fig. 2. Die beiden Profile 8 und 9 sind somit auf diese Weise gegeneinander kraft- und formschlüssig verriegelt. Das Trägerelement 1 weist im Bereich der Verbindungselemente 1a und 1b an seinen beiden unteren Enden Schrägen 1d auf, so daß ein leichteres Einrasten der Traversen 8 und 9 in den Aufnahmebereichen 1c erfolgen kann. Ist eine kraft- und formschlüssige Verbindung zwischen den Traversen 8 und 9 durch das Trägerelement 1 entstanden, so sind die beiden Traversen aufgrund der Ausgestaltung der Verbindungselemente 1a a und 1b derart miteinander verbunden, daß eine durch eine Belastung hervorgerufene Torsion durch das Zusammenwirken der beiden kraftschlüssig miteinander verbundenen Traversen stark reduziert wird und die statische Absicherung des gesamten Lagerregals somit erhöht wird. Das Trägerelement 1 dient somit nicht nur der Aufnahme von Lagerstangen 16, sondern auch der Torsionskupplung der beiden Traversen, die durch das Trägerelement miteinander verbunden sind.

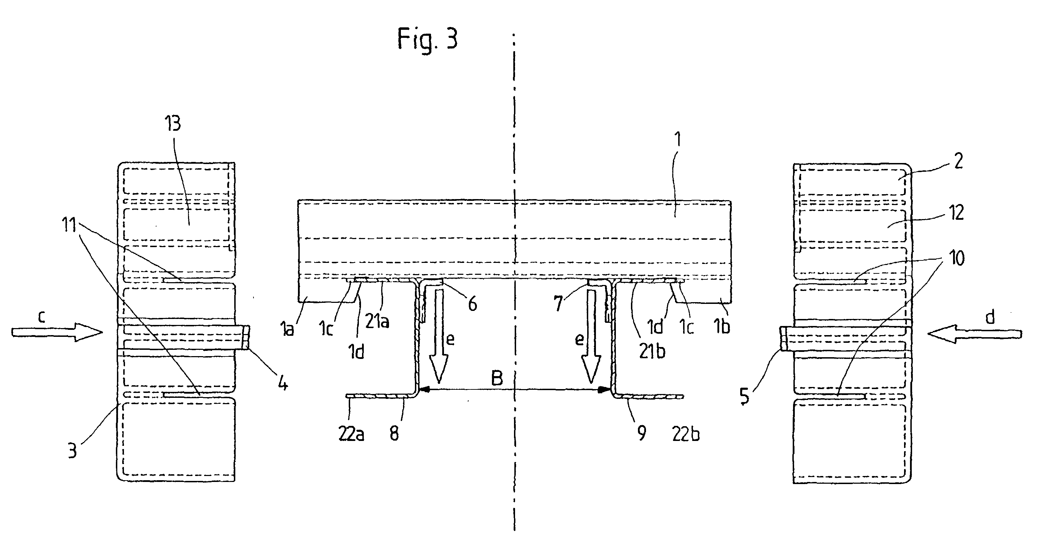

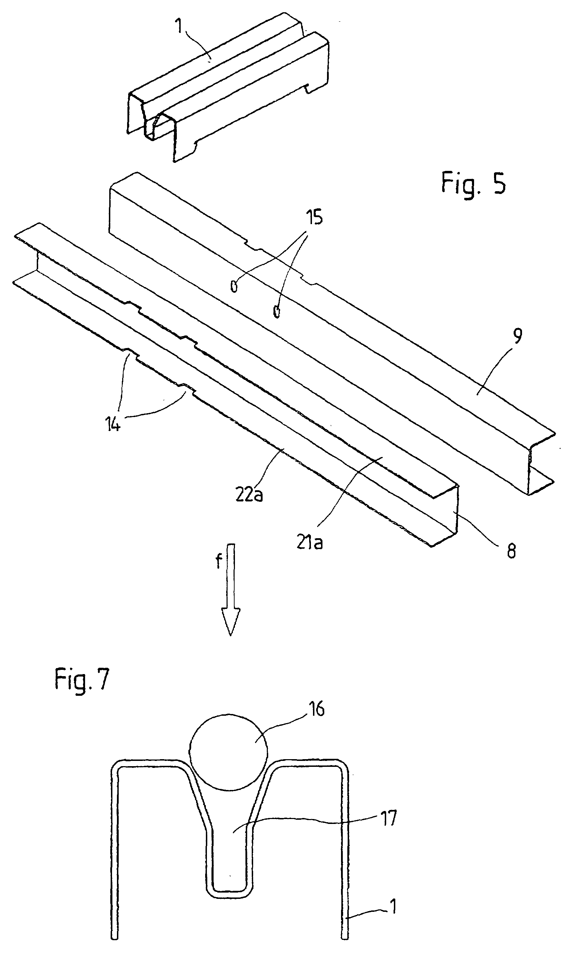

Aus Fig. 5 ist ersichtlich, daß die U- bzw. C-förmigen Profile Aussparungen 14 zum Aufnehmen des Trägerelementes 1 aufweisen. Die Aussparungen 14 fixieren das Trägerelement 1 positionsgenau bezüglich der vom Trägerelement 1 1 aufzunehmenden Lagerstangen. Durch diese positionsgenaue Anordnung der Trägerelemente 1 wird sichergestellt, daß der Abstand zwischen den die Ware aufnehmenden Lagerstangen fest definiert und gleichbleibend ist, womit eine optimale Raumausnutzung gewährleistet wird. Zudem sichern die Aussparungen 14 das Trägerelement gegen ein Verrutschen in axialer Richtung, so daß die Montage der Haltevorrichtung fortgeführt werden kann, ohne daß das Trägerelement 1 durch zusätzliche Befestigungsmittel gesichert werden müßte. Fig. 3 zeigt den zweiten Montageschritt der Haltevorrichtung. Nachdem im ersten Montageschritt das Trägerelement 1 mit den U- bzw. C-förmigen Profilen kraft- und formschlüssig verbunden wurde, werden nun in einem zweiten Montageschritt die Aufsetzelemente 2 und 3 befestigt. Dabei wird das kappenförmige Aufsetzelement 3 in Richtung des Pfeils c auf das Trägerelement 1 aufgesteckt. Zur Aufnahme des Trägerelementes 1 weist das Aufsetzelement 3 einen entsprechenden Aufnahmebereich 13 auf. Nachdem das Aufsetzelement 3 auf das Trägerelement 1 gesteckt ist, wird es in Pfeilrichtung c auf dem Trägerelement 1 verschoben. Die beiden Schenkel 21a und 22a des U- bzw. C-förmigen Profils werden dabei in die als Aufnahme dienenden Schlitze eingeführt. Das Aufsetzelement 3 wird nun so weit verschoben, bis das in der Zeichnungsebene rechte Ende des Aufsetzelementes 3 am Profil 8 anschlägt, wobei die Enden der hervorstehenden Befestigungselemente 4 durch entsprechende Bohrungen 15 im Profil 8 hindurch in den durch die beiden Profile 8 und 9 gebildeten Zwischenraum ragen. Die Anordnung der Bohrungen 15 zeigt Fig. 5. Das Aufsetzelement 2 wird in gleicher Weise entsprechend dem Aufsetzelement 3 in Pfeilrichtung d auf das Trägerelement 1 gesteckt und auf diesem verschoben, bis das in Zeichnungsebene linke Ende des Aufsetzelementes 2 am Profil 9 anschlägt, wobei die Enden der hervorstehenden Befestigungselemente 5 durch entsprechende Bohrungen im Profil 9 hindurchragen.

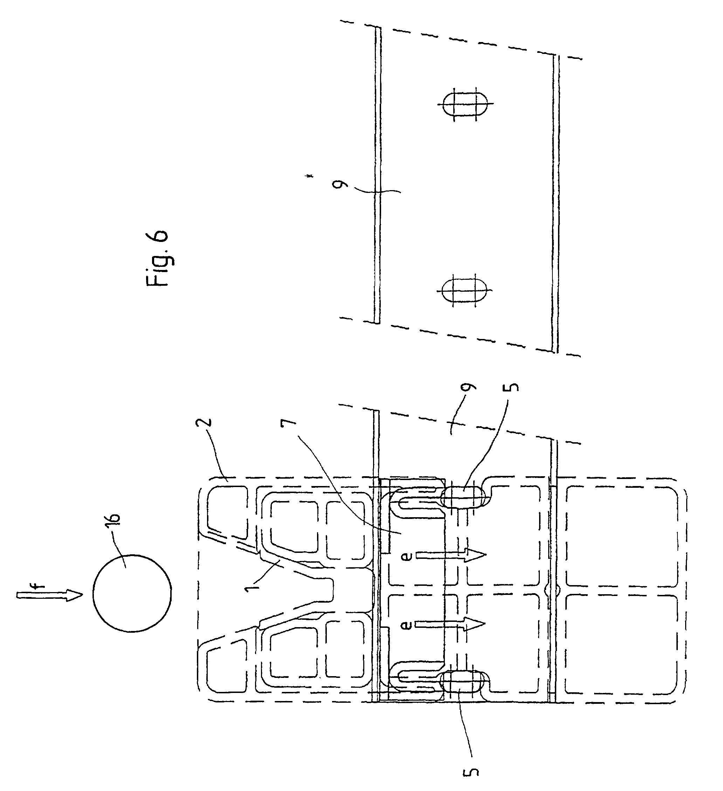

Nachdem die kappenförmigen Aufsetzelemente 2 und 3 aufgesteckt und fixiert sind, werden sie durch die Sicherungselemente 6 und 7 gesichert. Bei diesem Ausführungsbeispiel handelt es sich bei den Sicherungselementen 6 und 7 um - im Querschnitt betrachtet - L-förmige Winkelprofile, die entsprechend der beiden Befestigungselemente auf jeder Seite zwei Schlitze aufweisen. Dies verdeutlicht Fig. 6. Die L-förmigen Sicherungselemente 6 und 7 werden von oben in Richtung der Pfeile e über die Enden der Befestigungselemente 4 und 5 geführt, wobei die Befestigungselemente 4 und 5 zur Aufnahme der Sicherungselemente jeweils eine umlaufende Nut aufweisen. Sind die Sicherungselemente 6 und 7 aufgesteckt, so sind die Verbindungselemente 2 und 3 gegen Verrutschen gesichert und die Montage der Haltevorrichtung ist abgeschlossen.

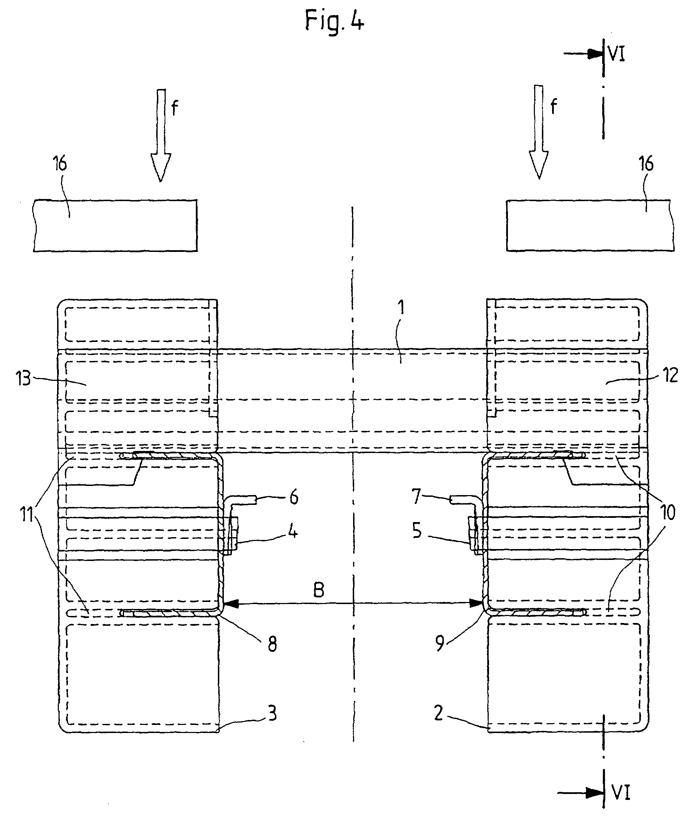

Fig. 4 zeigt eine schematischen Schnittdarstellung einer Haltevorrichtung nach Beendigung der Montage. Die einander zugewandten Enden zweier in Traversenrichtung benachbarter Lagerstangen 16 können nun in Pfeilrichtung f in den V-förmigen Aufnahmebereich des Trägerelementes 1 eingebracht werden. Dies zeigt in einer schematischen Seitenschnittdarstellung ebenfalls Fig. 6.

Wie in Fig. 4 dargestellt, nimmt das Trägerelement 1 in vorteilhafter Weise nicht nur zwei Lagerstangenenden auf, sondern verbindet zudem die beiden U-bzw. C-förmigen Profile 8 und 9 kraft- und formschlüssig miteinander, so daß eine zusätzliche statische Absicherung des gesamten Lagerregals durch die Verwendung der erfindungsgemäßen Haltevorrichtung erreicht wird. Durch die erfindungsgemäße Ausbildung der Haltevorrichtung wird zudem in vorteilhafter Weise eine Torsionskupplung zwischen den beiden U- bzw. C-förmigen Profilen 8 und 9 erreicht, da die durch die Gewichtskraft der an den Lagerstangen hängenden Waren erzeugte Torsion der U- bzw. C-förmigen Profile kompensiert wird. Die Kompensation der an den U- bzw. C-förmigen Profilen auftretenden Torsion wird dabei dadurch erreicht, daß die Profile über das Trägerelement 1 kraftschlüssig miteinander verbunden sind und die auf der einen Seite des Trägerelementes 1 wirkende Kraft bezüglich der Torsion durch das benachbarte Profil, das auf der anderen Seite des Trägerelementes im Aufnahmebereich eingerastet ist, kompensiert wird.

Die perspektivische Darstellung der beiden U- bzw. C-förmigen Profile gemäß Fig. 5 zeigt, daß die Aussparungen 14 zur Aufnahme des Trägerelementes 1 sowohl am Schenkel 21a als auch am Schenkel 22a ausgebildet sind und daß die Bohrungen 15 bezüglich der vertikalen Richtung mittig im Profil ausgebildet sind. Hierdurch wird in vorteilhafter Weise erreicht, daß diese als U- bzw. C-förmige Profile ausgebildeten Traversen sowohl links- als auch rechtsseitig mit den in dieser Fig. nicht dargestellten vertikalen Stützen verbindbar sind.

Fig. 7 zeigt eine schematische Seitenansicht des V-förmigen Aufnahmebereiches 17 des Trägerelementes 1 zur Positionierung der Lagerstange 16, die in Richtung des Pfeils f in den Aufnahmebereich 17 eingebracht wird. Die aufgrund der V-förmigen Ausbildung des Aufnahmebereiches 17 geweitete Aufnahme ermöglicht dabei in vorteilhafter Weise das Einhängen und das Wiederherausnehmen einer Lagerstange 16.

## Patentansprüche

1. Haltevorrichtung für Lagerstangen (16) zur Aufnahme von Waren zur hängenden Lagerung, in einem Lagerregal (18), welches aus vertikalen Stützen (19) und horizontalen, wenigstens zwei benachbarte Stützen miteinander verbindenden Traversen (8, 9) besteht,
**dadurch gekennzeichnet,**
**daß** die Haltevorrichtung aus einem Trägerelement (1) und zwei daran ausgebildeten Verbindungselementen (1a, 1b) besteht, wobei das Trägerelement (1) die einander zugewandten Enden zweier in Traversenquerrichtung benachbarter Lagerstangen (16) aufnimmt und das Trägerelement (1) mittels der Verbindungselemente (1a, 1b) mit zugleich zwei Traversen (8, 9) kraftschlüssig verbunden ist.

2. Haltevorrichtung nach Anspruch 1, **dadurch gekennzeichnet, daß** die Verbindungselemente (1a, 1b) mit Aufnahmebereichen (1c) versehen sind, in die die Traversen (8, 9) oder Teile davon formschlüssig hineinragen.

3. Haltevorrichtung nach einem der Ansprüche 1 oder 2, **dadurch gekennzeichnet, daß** die beiden Traversen (8, 9) U- oder C-förmige Profile sind, deren Öffnungen voneinander abgewandt sind, wobei die Aufnahmebereiche (1c), die an beiden Enden des Trägerelementes (1) ausgebildet sind, die freien Enden der oberen Schenkel (21a, 21b) der U-bzw. C-förmigen Profile umgreifen und so die beiden Profile kraft- und formschlüssig gegeneinander verriegeln.

4. Haltevorrichtung nach einem der Ansprüche 1 bis 3, **dadurch gekennzeichnet, daß** das Trägerelement (1) zum leichteren Einrasten der Traversen (8, 9) in den Aufnahmebereichen (1c) entsprechend ausgebildete Schrägen (1d) aufweist.

5. Haltevorrichtung nach wenigstens einem der vorhergehenden Ansprüche, **dadurch gekennzeichnet, daß** das Trägerelement (1) einschließlich der Verbindungselemente (1a, 1b) aus einem Stück besteht.

## Claims

1. Retaining arrangement for storage bars (16) for accommodating items which are to be hung in a storage rack (18), which comprises vertical supports (19) and horizontal crossmembers (8, 9) connecting at least two adjacent supports to one another, **characterized in that** the retaining arrangement comprises a carrier element (1) and two connecting elements (1a, 1b) formed thereon, the carrier element (1) accommodating the mutually facing ends of two storage bars (16) which are adjacent in the transverse direction of the crossmembers, and the carrier element (1) being connected in a force-fitting manner, by means of the connecting elements (1a, 1b), to two crossmembers (8, 9) at the same time.

2. Retaining arrangement according to Claim 1, **characterized in that** the connecting elements (1a, 1b) are provided with accommodating regions (1c) into which the crossmembers (8, 9), or parts thereof, project in a form-fitting manner.

3. Retaining arrangement according to either of Claims 1 and 2, **characterized in that** the two crossmembers (8, 9) have U-shaped or C-shaped profiles, of which the openings are directed away from one another, the accommodating regions (1c), which are formed at both ends of the carrier element (1), engaging around the free ends of the top legs (21a, 21b) of the U-shaped or C-shaped profiles and thus locking the two profiles in a force-fitting and form-fitting manner in relation to one another.

4. Retaining arrangement according to one of Claims 1 to 3, **characterized in that**, in order for the crossmembers (8, 9) to be latched more easily in the accommodating regions (1c), the carrier element (1) has appropriately designed slopes (1d).

5. Retaining arrangement according to at least one of the preceding claims, **characterized in that** the carrier element (1) and the connecting elements (1a, 1b) are made in one piece.

## Revendications

1. Dispositif de soutien de barres de stockage (16), qui servent à recevoir des marchandises destinées à être stockées suspendues, dans une étagère de stockage (18) constituée de montants verticaux (19) et de traverses horizontales (8, 9) reliant entre eux au moins deux montants voisins,
**caractérisé en ce que**
le dispositif de soutien est constitué d'un élément porteur (1) et de deux raccords (1a, 1b) réalisés sur ce dernier, l'élément porteur (1) recevant les extrémités dirigées l'une vers l'autre de deux barres de stockage (16) qui sont voisines dans la direction transversale aux traverses et l'élément porteur (1) étant relié solidairement à deux traverses (8, 9) en même temps au moyen des raccords (1a, 1b).

2. Dispositif de soutien selon la revendication 1, **caractérisé en ce que** les raccords (1a, 1b) sont pourvus de zones de réception (1c) dans lesquelles les traverses (8, 9) ou des parties de celles-ci pénètrent en complémentarité de forme.

3. Dispositif de soutien selon l'une des revendications 1 ou 2, **caractérisé en ce que** les deux traverses (8, 9) sont des profilés en U ou en C dont les ouvertures sont orientées dans des sens opposés, les zones de réception (1c) formées aux deux extrémités de l'élément porteur (1) enveloppant les extrémités libres de la branche supérieure (21a, 21b) des profilés en U ou en C et bloquant ainsi les deux profilés l'un par rapport à l'autre solidairement et par complémentarité de forme.

4. Dispositif de soutien selon l'une des revendications 1 à 3, **caractérisé en ce que** l'élément porteur (1) comporte des biseaux (1d) formés de manière appropriée afin d'encliqueter plus facilement les traverses (8, 9) dans les zones de réception (1c).

5. Dispositif de soutien selon au moins l'une des revendications précédentes, **caractérisé en ce que** l'élément porteur (1), raccords (1a, 1b) compris, est fait d'une seule pièce.
